# EUROPÄISCHE PATENTSCHRIFT

(11) **EP 0 292 872 B1**
(45) Veröffentlichungstag und Bekanntmachung des Hinweises auf die Patenterteilung: **25.05.1994**
(21) Anmeldenummer: 88108032.9
(22) Anmeldetag: 19.05.1988
(51) Int. Cl.: A01C 17/00

(54) **Schleuderdüngerstreuer**
Broadcaster
Epandeur d'engrais centrifuge

(30) Priorität: 29.05.1987 DE 3729871; 29.05.1987 DE 3718145; 23.10.1987 DE 3735896; 29.02.1988 DE 3806439
(43) Veröffentlichungstag der Anmeldung: 30.11.1988
(60) Teilanmeldung: 93108441.2
(73) Patentinhaber: Amazonen-Werke H. Dreyer GmbH & Co. KG, D-49205 Hasbergen (DE)
(72) Erfinder: Dreyer, Heinz, Dipl.-Ing. Univ. Dr. agr., D-4507 Hasbergen (DE)
(74) Vertreter: Grünecker, Kinkeldey, Stockmair & Schwanhäusser Anwaltssozietät

(56) Entgegenhaltungen:
- EP-A- 0 158 335
- EP-A- 0 240 734
- FR-A- 2 417 928
- FR-A- 2 450 551
- GB-A- 2 154 412

## Beschreibung

Die Erfindung betrifft einen Schleuderdüngerstreuer und ein Verfahren zum Ausbringen von Dünger mit einem Schleuderdüngerstreuer.

Schleuderdüngerstreuer sind vielfach bekannt, beispielsweise auf durch die DE-PS 28 35 011. Mit einem derartigen Schleuderdüngerstreuer lassen sich Arbeitsbreiten von 10 bis 24 m und bei einigen Düngern auch Arbeitsbreiten von 27 m erreichen. Eine Arbeitsbreite von 24 m ist jedoch nicht mit allen Düngern, vor allem nicht mit kleineren Körnungen, wie beispielsweise Harnstoff möglich.

Seit einiger Zeit sind nun in der Praxis Pflanzenschutzspritzen mit 32 und 36 m Arbeitsbreite auf Großbetrieben im praktischen Einsatz. Somit werden also zwangsläufig auch für Düngerstreuer derartig große Arbeitsbreiten gefordert.

Durch den Prospekt "Precilarge" der Firma Nodet ist nun ein Exaktdüngerstreuer mit einer Streubreite von 32 m beschrieben. Dieser Düngerstreuer weist auf jeder Seite der Maschine um in Fahrtrichtung verlaufende Achsen schnell umlaufende Wurfwalzen auf, mit denen der Dünger seitlich der Maschine abgeschleudert wird. Diese Maschine ist relativ schwer und relativ teuer, weil sie relativ viele bewegte Teile aufweist. Die Verteilgenauigkeit bei diesem Düngerstreuer läßt jedoch, wie Untersuchungen gezeigt haben, in vielerlei Hinsicht zu wünschen übrig. Vor allem die Düngerverteilung ist zu ungleichmäßig.

Des weiteren sind pneumatische Düngerstreuer mit Auslegern bekannt, die eine Arbeitsbreite bis 24 m aufweisen. Pneumatische Düngerstreuer sind jedoch sehr aufwendig und sind dann, wenn die Arbeitsbreiten 24 m übersteigen, aufgrund des Gewichts und auch des Herstellungsaufwands und damit letztlich auch des Verkaufspreises fast unverkäuflich.

Aus der FR-A-24 17 928 ist ein Schleuderdüngerstreuer bekannt, bei dem Schleuderelemente mit sternförmig abstehenden Wurfschaufeln eingesetzt werden, um in dieser Druckschrift nicht näher spezifizierte Arbeitsbreiten zu erzielen. Der Dünger wird dort in der Nähe der Drehachse der Schleuderelemente aufgegeben und dann durch Drehen der Schleuderelemente mit üblichen Drehzahlen zwischen 200 und 600 Umdrehungen pro Minute verteilt. Die Wurfelemente sind nicht verstellbar, sondern einheitlicher Bestandteil der Schleuderelemente.

Durch die spezielle Ausbildung der Wurfelemente einerseits und die angegebenen geringen Drehzahlen wird dort bereits für eine Arbeitsbreite von 16 m ein Gestänge benötigt, an dem 6 Schleuderorgane beabstandet zueinander nebeneinander angeordnet sind.

Der Erfindung liegt die Aufgabe zugrunde, einen Schleuderdüngerstreuer und ein Verfahren zum Ausbringen von Dünger vorzuschlagen, wobei es möglich sein soll, in einfacher Weise mit verschiedenen Arbeitsbreiten, insbesondere auch mit Arbeitsbreiten von 36 m mit gleichmäßiger Düngerverteilung arbeiten zu können.

Diese Aufgabe wird mit einem Schleuderdüngerstreuer nach dem Anspruch 1 sowie mit einem Verfahren nach dem Anspruch 8 gelöst.

Durch die Maßnahmen des Anspruchs 1 wird ein Schleuderdüngerstreuer geschaffen (Zentrifugaldüngerstreuer mit um vorzugsweise aufrechte Achsen umlaufenden Schleuderscheiben), der in seiner Bauart wesentlich einfacher konzipiert ist als vergleichbare Streuer, die wesentlich aufwendiger konstruiert sind (s. Beschreibungseinleitung) und trotzdem nicht einmal diese Arbeitsbreiten von 36 m erreichen.

In diesem Zusammenhang ist von Bedeutung, daß durch die Merkmalskombination des Anspruchs 1 eine Gefahr der Zerschlagung der Düngerpartikel nicht besteht, da der Dünger langsam und schonend auf die erforderlich große Beschleunigung gebracht wird, bevor er dann abgeschleudert wird. Die Wurfweite kann sogar je nach Windverhältnissen und nach Düngertyp mehr als 36 m betragen.
Eine einfache Anpassung der Wurfschaufeln an die verschiedenen Düngersorten wird dadurch erreicht, daß die Wurfschaufeln in Scheibeneebene winkelverschwenkbar gegenüber der Radialen angeordnet und mittels Skalen oder Markierungselementen exakt einstellbar sind, wodurch die bei diesen großen Streubreiten besonders problematischen bzw. wichtigen Einstellungen der Maschine auf verschiedene Düngersorten in einfacher und exakter Weise vorgenommen werden kann. Dadurch, daß sehr lange Wurfschaufeln zum Erreichen der Arbeitsbreite von 36 m und mehr eingesetzt werden, wird eine schonende Beschleunigung der Düngerkörner ohne Zerschlagung erreicht.

Des weiteren können zusätzliche Einstellungen, wie Drehzahländerung, Höhenverstellung und Neigungsverstellung der gesamten Maschine zusätzlich noch Verbesserungen der Streuarbeit ergeben, sie sind aber aufgrund der vorgeschlagenen erfindungsgemäßen Maßnahmen meist nur noch in Ausnahmefällen bei Problemdüngern erforderlich.

Die Wurfschaufeln sind so angeordnet, daß sie jeweils verschiedene Sektoren des Streubildes bestreuen.

Damit mit dem erfindungsgemäß vorgeschlagenen Schleuderstreuern auch kleinere Arbeitsbreiten ohne eine zu große nachteilige Wurfweite zu erreichen, ist erfindungsgemäß vorgesehen, daß die Schleuderscheibe mit den Wurfschaufeln gegen anders ausgebildete Schleuderscheiben mit Wurfschaufeln anderer Ausstattung austauschbar sind. Hierbei weisen beispielsweise zum Erreichen von Streubreiten von 18 m die anders ausgestatteten Schleuderscheiben Wurfschaufeln auf, deren äußeren Enden bei der Rotation Umlaufbahnen beschreiben, welche einen Durchmesser von etwa 55 bis 70 cm aufweisen. Auch diese Wurfschaufeln sind in Scheibenebene winkelverschwenkbar und mit unterschiedlichen Winkeln zur Radialen einstellbar, so daß eine äußerst gleichmäßige Düngerverteilung erreicht wird. Auch bei Arbeitsbeiten zum Erreichen von 18 m werden diese anders ausgebildeten Schleuderscheiben, d.h. Schleuderscheiben mit kürzeren wirksamen Wurfschaufeln, mit der gleichen Drehzahl wie zum Erreichen der großen Arbeitsbreite angetrieben. Somit ist es in erfindungsgemäßer Weise möglich, auch kleinere Arbeitsbreiten (Bruchteile von 36 m z.B. also 18 m oder 12 m) mit der gleichen Maschine etwa bei starkem Wind einstellbar zu machen. Um dieses Ziel zu erreichen, sind dann wie vorgeschlagen, die Scheiben oder die Wurforgane austauschbar. Somit kann also bei verhältnismäßig windstillem Wetter der Dünger mit der erfindungsgemäßen Maschine beispielsweise über die Arbeitsbreiten von 36 m verteilt werden oder bei stärkerem Wind über Arbeitsbreiten von 18 m, wenn entsprechend die Wurfschaufeln ausgetauscht werden. Somit können also bei der Verwengung der gleichen Drehzahl wie bei den großen Scheiben durch die Wurfelemente mit kleineren Umlaufbahnendurchmesser auch Harnstoffdünger über 18 bzw. 12 m Arbeitsbreite verteilt werden. Auf diese Weise wird ein Zentrifugaldüngerstreuer geschaffen, der bisher nie erreichte Arbeitsbreiten bestreuen kann und der auch auf Bruchteile dieser großen Arbeitsbreiten einrichtbar ist - was für das bekannte Fahren nach Fahrgassen außerordenlich wichtig bzw. nützlich ist. Ein Landwirt mit einer Pflanzenschutzspritze von beispielsweise 18 m kann seine Fahrgassen mit der Drillmaschine auf 18 m anlegen. Bei günstigem Wetter und bekanntem Dünger - auch bei der Spätdüngung - kann er dann mit der erfindungsgemäßen Maschine den Dünger mit 36 m Arbeitsbreite streuen, wobei dann nur jede zweite Fahrgasse befahren wird. Bei stärkerem Wind ist es dann auf einfachste Weise möglich, den Düngerstreuer nach der vorgeschlagenen Art auf 18 m Arbeitsbreite umzurüsten.

In erfindungsgemäßer Weise ist also vorgesehen, daß der Schleuderstreuer durch den Austausch der Wurfschaufel gegen Wurfschaufeln mit anderen wirksamen Längen zumindest auf drei Streubreitenbereiche einstellbar ist, insbesondere Fahrgassenstreubreiten. Es sind also vorzugsweise drei verschiedene Schleuderscheibensätze mit unterschiedlich ausgebildeten Wurfschaufeln oder drei verschiedene Wurfschaufelsätze, die austauschbar auf den Schleuderscheiben angeordnet sind, vorgesehen. Zur Spätdüngung sind die Maschinen in erfindungsgemäßer Weise selbst angehoben oder vorzugsweise werden die Schaufeln in bekannter Weise mit schwenkbaren Flügeln (sog. Schwenkschaufeln) ausgestattet oder gegen sog. Spätdüngungsschaufeln ausgetauscht. Die 36 m Arbeitsbreite ist nach heutiger Erkenntnis dabei gerade für den Landwirt von größtem Interesse, da er beispielsweise wegen seiner 12 m Spritze seine Fahrgassen auf 12 m anlegt. Die erste Fahrgasse liegt dann 6 m vom Feldrand entfernt, die nächste 12 m weiter, also 12 m plus 6 m ergeben 18 m vom Feldrand entfernt. Diese zweite Fahrgasse ist dann auch genau die richtige Fahrgasse für die 36 m Arbeitsbreite zum Düngen. Die dreifache Arbeitsbreite gegenüber dem Fahrgassenabstand ist also für sehr viele Landwirte noch interessanter und passender als die doppelte Arbeitsbreite. Gerade deshalb ist auch das Erreichen von 36 m Arbeitsbreite beim Düngen mit einer äußerst gleichmäßigen Düngerverteilung an Stelle von bisher erreichter 24 m Arbeitsbreite von ganz besonderer praktischer Bedeutung. Bisher wurde in der Fachwelt das Erreichen von 36 m Arbeitsbreite mit einer äußerst gleichmäßigen Düngung und einer ausreichenden Überlappung der nebeneinander liegenden Streubahnen für unerreichbar gehalten. Erst die vorgeschlagene Erfindung schafft hier Abhilfe und einen neuen bahnbrechenden Weg.

Weiterhin ist erfindungsgemäß vorgesehen, daß im Bereich der Wurfschaufeln an den Schleuderscheiben in radialer Richtung sich erstreckende Verlängerungsstücke angeordnet sind und daß in diesen Verlängerungsstücken jeweils Arretierungselemente zum Arretieren der in Scheibenebene winkelverschwenkbaren Wurfschaufeln angeordnet sind. Diese erfindungsgemäße Maßnahme wird in bevorzugter Weise bei den Schleuderscheiben angewendet, welche mit den langen Wurfschaufeln zum Erreichen der 36 m Arbeitsbreite ausgestattet sind. Durch diese Verlängerungsstücke wird einerseits eine vorteilhafte Stabilisierung der über die Schleuderscheiben weit überstehenden Wurfschaufelenden erreicht. In bevorzugter Weise werden nämlich Schleuderscheiben mit einem relativ kleinen Durchmesser verwendet, um so das Anlaufmoment der Schleuderscheiben möglichst gering zu halten. Weiterhin ist erfindungsgemäß vorgesehen, daß für jede Wurfschaufel zwei in radialem Abstand zueinander angeordnete Langlöchern vorgesehen sind und daß in diesen Langlöchern an den Wurfschaufeln angeordnete Schraubbolzen ragen, auf welche Flügelmuttern angeordnet sind. Hierdurch wird eine äußerst einfache Verstellung und Arretierung der Wurfschaufeln in den unterschiedlichen Winkelstellungen in Scheibenebene erreicht. Damit die Wurfschaufeln mit den Flügelmuttern in äußerst einfacher Weise auch sicher auf den Schleuderscheiben festgeklemmt werden, ist erfindungsgemäß vorgesehen, daß die Schleuderscheiben konkav ausgebildet sind, während die Wurfschaufeln linear ausgebildet sind. Infolge dieser Maßnahmen wird eine sehr gute Verspannung der Schaufel auf der Schleuderscheibe erreicht. Die untere gerade Fläche der Schaufel wird durch die Schraubbolzen und Flügelmuttern gegen die konkav ausgebildete Fläche der Wurfschaufel gezogen, so daß sich die sehr gute Verspannung ergibt.

Des weiteren ist erfindungsgemäß vorgesehen, daß auf jeder Schleuderscheibe zumindest zwei unterschiedlich lange Wurfschaufeln angeordnet sind und daß der kürzeren Wurfschaufel ein größeres und/oder schwereres Verlängerungsstück als der längeren Wurfschaufel zugeordnet ist. Somit wird ein Massenausgleich bzw. ein Unwuchtausgleich durch die Verlängerungsstücke erreicht.

Es ist auch möglich, an Stelle der an den Schleuderscheiben angeordneten Verlängerungsstücke die Schleuderscheibe selbst oval oder anders auszubilden bzw. die Verlängerungsstücke unmittelbar in die Form der Schleuderscheibe zu integrieren oder die Schleuderscheibe mit den Verlängerungsstücken einstückig herzustellen.

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäß ausgebildeten Schleuderstreuer in der Ansicht von hinten,
- Fig. 2: die erfindungsgemäß ausgebildete Schleuderscheibe zum Erreichen von Arbeitsbreiten bis zu 36 m in der Draufsicht,
- Fig. 3: Schleuderscheiben zum Erreichen von Arbeitsbreiten bis 24 m in der Draufsicht und
- Fig. 4: Schleuderscheiben zum Erreichen von Arbeitsbreiten bis 18 m.

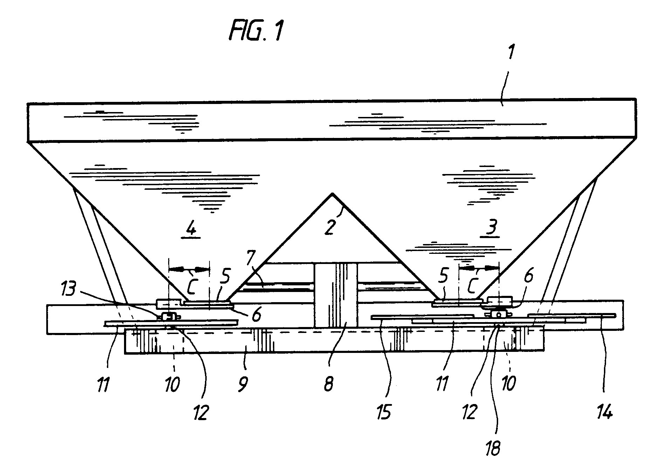

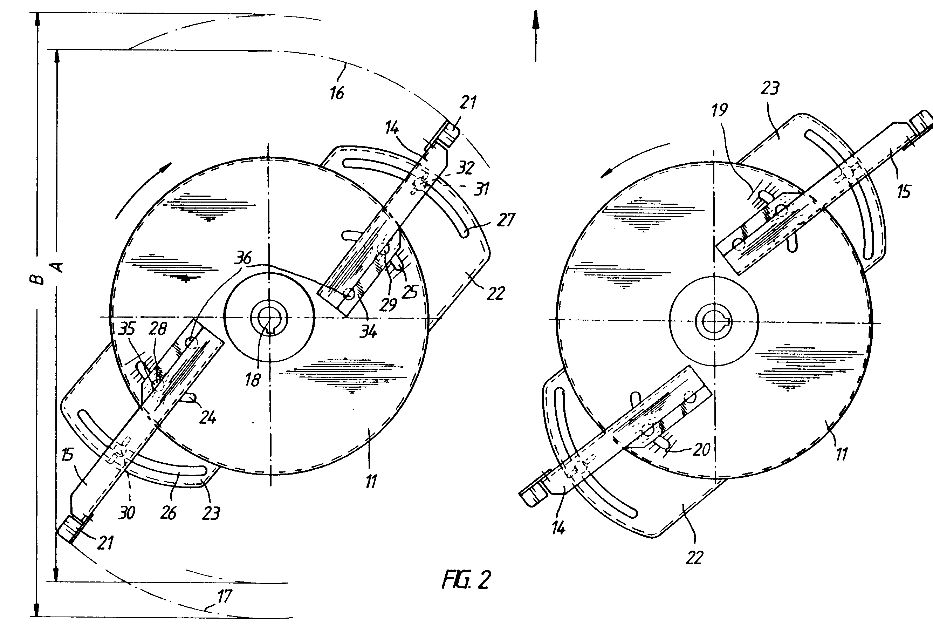

Der Schleuderdüngerstreuer weist den Vorratsbehälter 1 auf, wobei der untere Bereich des Vorratsbehälters durch ein dachförmiges Mittelteil 2 in die Auslauftrichter 3 und 4 unterteilt ist. Die Auslauftrichter 3 und 4 sind durch die Bodenplatten 5 nach unten abgeschlossen. In den Bodenplatten 5 befinden sich die Auslauföffnungen, welche über die Schieber 6 in ihrer Größe einstellbar sind. Hierdurch ist es möglich, den sich im Vorratsbehälter 1 befindlichen Dünger in einstellbaren Mengen auszubringen. In die unteren Trichterspitzen 3 und 4 ragt die horizontal liegend angeordnete Rührwelle 7, welche über das Getriebe 8 angetrieben wird. An dem Rahmen 9 des Schleuderdüngerstreuers sind die Getriebe 10 angeordnet, welche jeweils eine Schleuderscheibe 11 tragen. Diesen Schleuderscheiben 11 wird durch die sich in den Bodenplatten 5 befindlichen Auslauföffnungen in Verbindung mit den Schiebern 6 der sich im Vorratsbehälter 1 befindliche Dünger in einstellbaren Mengen zugeführt. Über das Getriebe 8, welches auf der Vorderseite eine Eingangswelle zur Kupplung mit Zapfwelle eines Schleppers aufweist, sowie über die Getriebe 10 werden die Schleuderscheiben 11, die auf den Getriebeausgangswellen 12 der Getriebe 10 mittels des Verschlusses 13 leicht lösbar befestigt sind, mit einer Drehzahl von 600 bis 1000 U/min, vorzugsweise 700 bis 900 U/min rotierend und zwar im entgegengesetzten Drehsinn angetrieben. Die auf den Schleuderscheiben 11 angeordneten Wurfschaufeln 14 und 15 beschreiben mit ihren äußeren Enden Umlaufbahnen 16 und 17 mit einem Durchmesser A und B von größer als 80 cm, vorzugsweise 90 bis 100 cm. Der Dünger wird aus dem Vorratsbehälter 1 über die sich in der Bodenplatte 5 befindliche Auslauföffnung in der Nähe der Rotationsachse 18, die durch die Schleuderscheibenwelle 12 verläuft, der Schleuderscheiben 11, etwa maximal 5 bis 15 cm von der Rotationsachse 18, wie durch das Maß C in Fig. 1 angedeutet, auf die jeweilige Schleuderscheibe 11 aufgegeben. Die Wurfschaufeln 14 und 15 sind in Scheibenebene winkelverschwenkbar gegenüber der Radialen auf den Schleuderscheiben 11 angeordnet und mittels der Skalen 19 und 20 exakt nach in einer Streutabelle enthaltenen Werten einstellbar. Mittels dieser entsprechend Fig. 2 beschriebenen Schleuderscheiben 11 mit den Wurfschaufeln 14 und 15 und der entsprechenden Anstellung der Wurfschaufeln 14 und 15 mit den vorgegebenem Winkel zur Radialen läßt sich praktisch für jede Düngersorte eine Arbeitsbreite von 36 m erreichen, wobei der Dünger über einen Wurfbereich bis zu 4u und 50 m weit abgeschleudert wird, wobei dann durch das Überlappen der nebeneinander liegenden Streubahnen eine äußerst gleichmäßige Düngerverteilung über Arbeitsbreiten bis zu 36 m erreicht wird.

Die Wurfschaufeln 14 und 15 sind derart gestaltet und so einstellbar, daß sie jeweils verschiedene Sektoren des Streubildes bestreuen, um so eine äußerst gleichmäßige Düngerverteilung zu erreichen.

An den äußeren Enden der Wurfschaufeln 14 und 15 sind die in aufrechter Ebene verschwenkbaren Ablenkflächen 21 angeordnet; mittels dieser Ablenkflächen 21 läßt sich in der nach unten geklappten Stellung die Normaldüngung durchführen, während zur Spätdüngung die Ablenkflächen 21 um einen bestimmten Winkel nach oben geklappt werden, um so die Düngerpartikel mit einem größeren Abwurfwinkel über di bereits hoch aufgewachsenen Pflanzen abwerfen zu können.

Auf den Schleuderscheiben 11 sind die beiden Wurfschaufeln 14 und 15 angeordnet, die eine unterschiedlich große Länge aufweisen. Die Wurfschaufel 15 ist länger als die Wurfschaufel 14. In dem Bereich der Wurfschaufeln 14 und 15 sind an den Schleuderscheiben 11 die sich in radialer Richtung erstreckenden Verlängerungsstücke 22 und 23 angeordnet. In der Schleuderscheibe 11 sind jeweils im Bereich der Wurfschaufeln 14 und 15 die Langlöcher 24 und 25 angeordnet. In den Verlängerungsstücken 22 und 23 sind die als Arretierungselemente ausgebildeten Langlöcher 26 und 27 angeordnet. In die Langlöcher 24, 25, 26 und 27 fassen die an den Wurfschaufeln 14 und 15 befestigten Schraubbolzen 28, 29, 30 und 31. Die Langlöcher 24, 25, 26 und 27 sind derart lang ausgebildet, daß die Wurfschaufeln 14 und 15 über den vorgesehenen Bereich in Scheibenebene verschwenkt werden können und mit unterschiedlichen Winkeln zur Radialen einstellbar sind. Auf der Unterseite der Schleuderscheibe 11 bzw. der Verlängerungsstücke 22 und 23 sind auf die Schraubbolzen Flügelmuttern 32 aufgesetzt über welche die Wurfschaufeln 14 und 15 in Verbindung mit den Schraubbolzen 28,29,30 und 31 die Wurfschaufeln in der gewünschten Position genau festzuklemmen sind. Die Langlöcher 24 und 26, sowie 25 und 27 sind jeweils in einem radialen Abstand zueinander angeordnet. Die Schleuderscheiben 11 und die Verlängerungsstücke 22 sind in der Draufsicht gesehen nach unten konkav ausgebildet, während die untere Leitfläche 34 und 35 der Wurfschaufeln 14 und 15 linear ausgebildet sind. Hierdurch ergibt sich, daß in nicht angezogenem Zustand der Wurfschaufeln 14 und 15 ein Abstand zwischen der Scheibe und der unteren Leitfläche 34 und 35 gegeben ist. Durch das Anziehen der Flügelmuttern 32 wird die untere Leitfläche 34 und 35 der Wurfschaufeln 14 und 15 gegen die Schleuderscheibe 11, sowie die Verlängerungsstücke 22 und 23 gezogen, so daß die Wurfschaufeln 15 verspannt werden und sich ein sehr fester Sitz der Wurfschaufeln 14 und 15 auf der Schleuderscheibe ergibt. Die Wurfschaufeln 14 und 15 lassen sich nach Lösen der als Arretierungselemente ausgebildeten Flügelmuttern 32 um den jeweiligen Drehbolzen 36, der als Reibschlußverbindung ausgebildet ist, verschwenken und anhand der Skalen 19 und 20 exakt einstellen.

Das Verlängerungsstück 22, welches der kürzeren und leichteren Wurfschaufel 14 zugeordnet ist, ist größer sowie schwerer als das Verlängerungsstück 23, welches der längeren und schwereren Wurfschaufel 15 zugeordnet ist, ausgebildet. Hierdurch wird ein Massenausgleich sowie ein Unwuchtausgleich der Schleuderscheibe 11 und den Wurfschaufeln sowie eine Stabilisierung der Wurfschaufeln 14 und 15 erreicht.

Mit den Schleuderscheiben 11 und den entsprechend ausgebildeten Wurfschaufeln 14 und 15, welche mit ihren äußeren Enden Umlaufbahnen mit einem Durchmesser von größer als 80 cm, vorzugsweise 90 bis 100 cm beschreiben, sowie mit einer Drehzahl mit 600 bis 1000 U/min, vorzugsweise 700 bis 900 U/min angetrieben sind, sowie mit der Aufgabe des Düngers in der Nähe der Rotationsachse der Schleuderscheiben 11 und durch die Winkelverschwenkbarkeit der Wurfschaufeln in Scheibenebene läßt sich in äußerst gleichmäßiger und überraschender Weise der Dünger über Arbeitsbreiten bis zu 36 m verteilen.

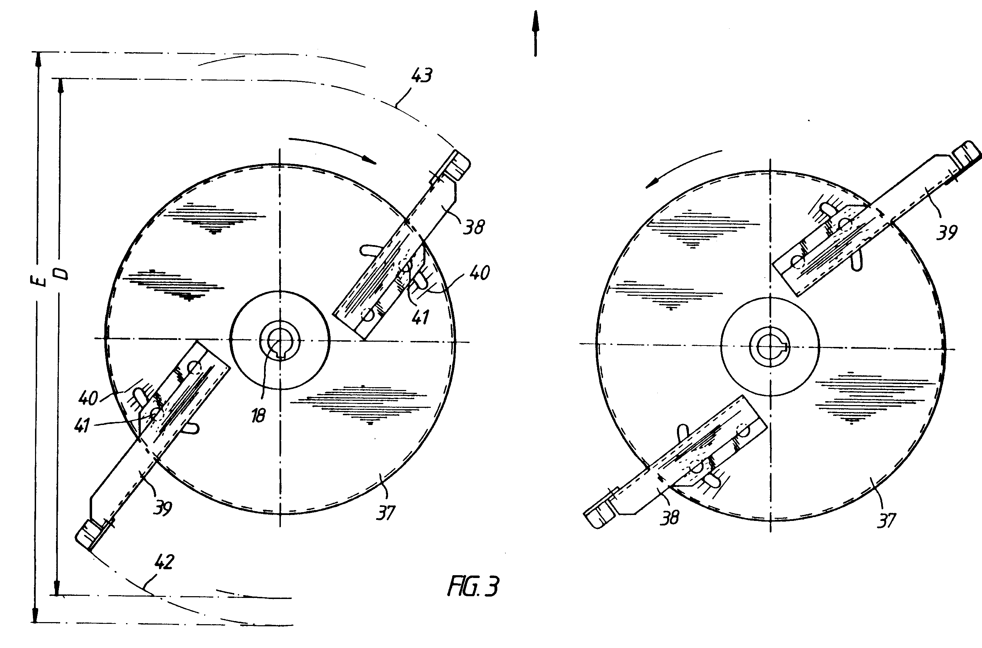

Um nun den Schleuderstreuer auch für geringere Arbeitsbreiten als 36 m, beispielsweise der Hälfte dieser Arbeitsbreite, also 18 m oder ein Teil, beispielsweise 24 m einsetzen zu können, sind die Schleuderscheiben 11 gegen die Schleuderscheiben 37 gemäß Fig. 3 austauschbar. Auf den Schleuderscheiben 37 sind die Wurfschaufeln 38 und 39 angeordnet. Die Schleuderscheiben 37 sind jeweils spiegelbildlich ausgebildet und werden in den durch die Pfeile gekennzeichneten Richtung in entgegengesetztem Drehsinn angetrieben. Die Wurfschaufeln 38 und 39 sind auf den Schleuderscheiben 37 in Scheibenebene winkelverschwenkbar angeordnet und in verschiedenen Winkeln anhand der Skalen 40 einzustellen und mittels der als Schraubbolzen 41 in den unterschiedlichen Winkeln zur Radialen auf der Schleuderscheibe 37 zu arretieren. Die äußeren Enden der Wurfschaufeln 38 und 39 beschreiben während ihrer Rotation Umlaufbahnen 42 und 43 mit einem Durchmesser D und E von etwa 55 bis 70 cm.

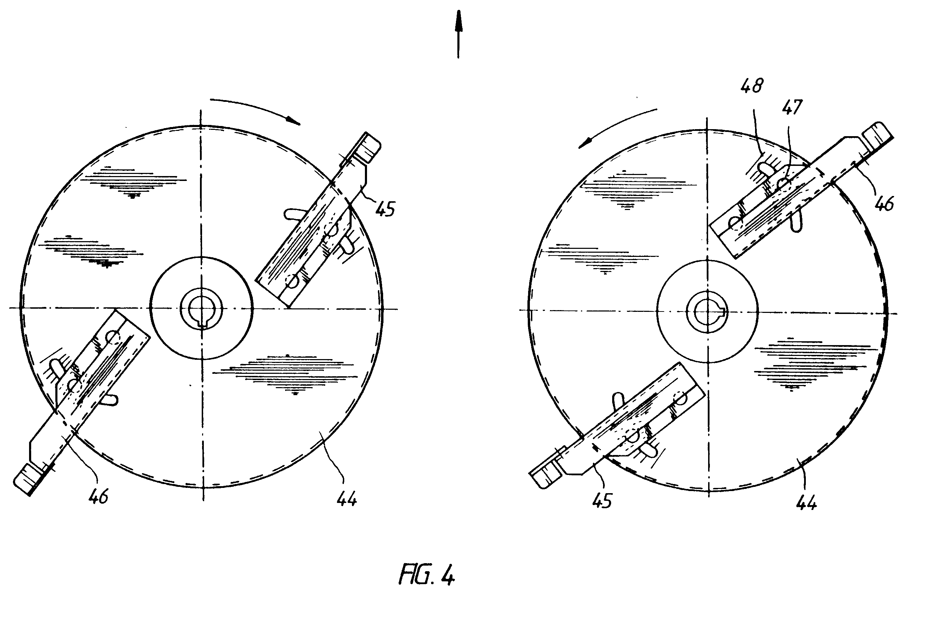

Um noch kleinere Arbeitsbreiten zu erreichen, sind auf den Schleuderscheibenwellen 12 die in Fig. 4 dargestellte Schleuderscheiben 44, welche wiederum spiegelbildlich ausgebildet sind, mit den Wurfschaufeln 45 und 46 anzuordnen. Die Wurfschaufeln 45 und 46 sind winkelverschwenkbar in Scheibenebene auf den Schleuderscheiben 44 angeordnet und mittels der als Schraubbolzen 47 ausgebildeten Arretierungselemente in unterschiedlichen Winkeln zur Radialen anhand der Skalen 48 einzustellen. Mit den in Fig. 4 dargestellten Schleuderscheiben mit den Wurfelementen 45 und 46 lassen sich Arbeitsbreiten von beispielsweise 12 m mit einer sehr gleichmäßigen Düngerverteilung erreichen.

Durch den Austausch der Schleuderscheiben 11 mit den Wurfschaufeln 14 und 15 gemäß Fig. 2 gegen die Schleuderscheiben 37 mit den Wurfelementen 38 und 39 gemäß Fig. 3 oder den Schleuderscheiben 44 mit den Wurfelementen 45 und 46 gemäß Fig. 4 ergeben sich drei Schleuderscheibensätze mit jeweils unterschiedlich wirksamen Schaufellängen welche gegeneinander austauschbar auf den Schleuderscheibenwellen 12 anzuordnen sind. Dieser Austausch der Schleuderscheiben mit den Wurfschaufeln mit anderen wirksamen Längen ermöglicht es den Schleuderstreuer auf drei Streubreitenbereiche einstellbar zu machen, insbesondere Fahrgassenstreubreiten. Selbstverständlich ist es auch möglich weitere Scheibensätze mit anderen Wurfschaufellängen beispielsweise für 18 m vorzusehen.

Der gemäß Fig. 2 vorgesehene Schleuderscheibensatz mit den Schleuderscheiben 11 und den Wurfschaufeln 14 und 15 ist für eine Arbeitsbreite bis zu 36 m also einem Arbeitsbreitenbereich von 30 bis 40 m, während der Schleuderscheibensatz gemäß Fig. 3 mit Schleuderscheiben 37 und den Wurfschaufeln 38 und 39 für eine Arbeitsbreite von 24 m, also einem Arbeitsbreitenbereich von 20 bis 28 m vorgesehen ist, während die Schleuderscheiben gemäß Fig. 4 auf eine mittlere Arbeitsbreite von 12 m, also einem Arbeitsbreitenbereich von 10 bis 18 m durch das unterschiedliche Einstellen der Wurfschaufeln zur Radialen einstellbar sind.

## Patentansprüche

1. Schleuderdüngerstreuer für Arbeitsbreiten von 10 bis 18 m oder 18 bis 24 m oder 30 bis 40 m,
- mit einem Vorratsbehälter (1),
- mit zwei rotierend angetriebenen, Wurfschaufeln (15) aufweisenden, abnehmbar angeordneten Schleuderscheiben (11),
- mit einstellbaren Dosierorganen (5, 6) zum Zudosieren des Düngers aus dem Vorratsbehälter zu den Schleuderscheiben in Abstand von 5 cm bis 15 cm von der Rotationsachse der Schleuderscheiben entfernt;
- mit einer Antriebseinrichtung zum Antreiben der Schleuderscheiben (11) mit Drehzahlen von 600 bis 1.000 Umdrehungen pro Minute, vorzugsweise 700 bis 900 Umdrehungen pro Minute;
- wobei die Wurfschaufeln mit ihren äußeren Enden Umlaufbahnen von weniger als 55cm oder 55 bis 70 cm oder mehr als 80 cm, vorzugsweise 90 bis 100 cm beschreiben, gegeneinander austauschbar und in Scheibenebene winkelverschwenkbar gegenüber der Radialen angeordnet sind und
- mit auf der Schleuderscheibe (11) angeordneten Skalen oder Markierungselementen (19, 20) zum exakten Einstellen der Wurfschaufeln,
- wobei die unterschiedlichen Arbeitsbreiten durch die verschiedenen von den äußeren Enden der Wurfschaufeln durchlaufenden Umlaufbahnen erreicht werden.

2. Schleuderdüngerstreuer nach Anspruch 1,
**dadurch gekennzeichnet,**
daß an den äußeren Enden der Wurfschaufeln (14, 15, 36, 39, 45, 46) in aufrechter Ebene verschwenkbare Ablenkflächen (21) angeordnet sind.

3. Schleuderdüngerstreuer nach Anspruch 1 oder 2,
**dadurch gekennzeichnet,**
daß in dem Bereich der Wurfschaufeln (14, 15) an den Schleuderscheiben (11) in radialer Richtung sich erstreckende Verlängerungsstücke (22, 23) angeordnet sind, daß in diesen Verlängerungsstücken jeweils Arretierungselemente (26, 27, 30, 31, 32) zum Arretieren der in Scheibenebene winkelverschwenkbaren Wurfschaufeln (14, 15) angeordnet sind.

4. Schleuderdüngerstreuer nach Anspruch 3,
**dadurch gekennzeichnet,**
daß die Arretierungselemente (26, 27, 30, 31, 32) in den Verlängerungsstücken (22, 23) als Langlöcher (26, 27) ausgebildet sind, in welche an den Wurfschaufeln (14, 15) angeordnete Bolzen ragen.

5. Schleuderdüngerstreuer nach wenigstens einem der vorstehenden Ansprüche,
**dadurch gekennzeichnet,**
daß für jede Wurfschaufel (14, 15) zwei in radialem Abstand zueinander angeordnete Langlöcher vorgesehen sind, daß in diese Langlöcher (24, 25, 26, 27) an den Wurfschaufeln (14, 15) angeordnete Schraubbolzen (28, 29, 30, 31) ragen, auf welchen Flügelmuttern (32) angeordnet sind.

6. Schleuderdüngerstreuer nach wenigstens einem der vorstehenden Ansprüche,
**dadurch gekennzeichnet,**
daß die Schleuderscheibe (11) konkav ausgebildet ist, und daß die Wurfschaufel (14, 15) linear ausgebildet ist.

7. Schleuderstreuer nach wenigstens einem der vorstehenden Ansprüche,
**dadurch gekennzeichnet,**
daß auf jeder Schleuderscheibe (11) zumindest zwei unterschiedlich lange Wurfschaufeln (14, 15) angeordnet sind, daß der kürzeren Wurfschaufel (14) ein größeres und/oder schwereres Verlängerungsstück (22) als der längeren Wurfschaufel (15) angeordnet ist.

8. Verfahren zum Ausbringen von Dünger über Arbeitsbreiten von über 30 m, insbesondere 32 bis 36 m, mit einem Schleuderdüngerstreuer nach Anspruch 1 mit zwei gegenläufig drehenden Schleuderscheiben, bei dem man den Dünger auf die Schleuderscheiben 5 bis 15 cm entfernt von der Rotationsachse der Schleuderscheiben aufgibt, bei dem man die Schleuderscheiben mit einer Drehzahl von 600 bis 1.000 Umdrehungen pro Minute, vorzugsweise 700 bis 900 Umdrehungen pro Minute dreht und bei dem man den Dünger mit auf den Schleuderscheiben angeordneten wurfschaufeln beschleunigt, deren äußeres Ende Umlaufbahnen von mehr als 80 cm, insbesondere 90 bis 100 cm beschreiben.

9. Verfahren zum Ausbringen von Dünger mit einem Schleuderstreuer nach Anspruch 1 auf einer landwirtschaftlichen Fläche mit einem Fahrgassenabstand von 12 m, wobei die erste Fahrgasse 6 m von einem Feldrand angelegt wird und die weiteren Fahrgassen jeweils im 12 m-Abstand zueinander liegen,
**dadurch gekennzeichnet,**
daß man in der zweiten Fahrgasse beginnt und dort den Dünger mit Wurfschaufeln auf Schleuderscheiben des Schleuderdüngerstreuers ausbringt, die eine wirksame Länge haben derart, daß deren äußere Teile Umlaufbahnen mit einem Durchmesser von zumindest 80 - 100 cm beschreiben, und daß man dann das Ausstreuen fortsetzt, indem jeweils 36 m voneinander entfernt liegende Fahrgassen befahren werden.

## Claims

1. Centrifugal fertiliser broadcaster for broadcasting over working widths of 10 to 18 m or 18 to 24 m or 30 to 40 m,
- including a hopper (1),
- including two rotatably driven, removably disposed centrifugal discs (11), which are provided with throwing vanes (15),
- including adjustable metering members (5, 6) for metering the fertiliser as it passes from the hopper to the centrifugal discs, which metering members are spaced at a distance of 5 cm to 15 cm from the rotary axis of the centrifugal discs,
- including a driving means for driving the centrifugal discs (11) at speeds of 600 to 1,000 revolutions per minute, preferably 700 to 900 revolutions per minute,
- the throwing vanes describing, with their external ends, circular paths of less than 55 cm or 55 to 70 cm or more than 80 cm, preferably 90 to 100 cm, said vanes being interchangeable with one another and being disposed in the plane of the discs so as to be angularly pivotable relative to the radial, and
- including scales or markings (19, 20), which are disposed on the centrifugal disc (11), for the exact adjustment of the throwing vanes,
- the different working widths being achieved by the various circular paths described by the external ends of the throwing vanes.

2. Centrifugal fertiliser broadcaster according to claim 1, characterised in that deflectors (21), which are pivotable in a vertical plane, are disposed at the external ends of the throwing vanes (14, 15, 36, 39, 45, 46).

3. Centrifugal fertiliser broadcaster according to claim 1 or 2, characterised in that extension members (22, 23), which extend in a radial direction, are disposed in the region of the throwing vanes (14, 15) on the centrifugal discs (11), and in that locking means (26, 27, 30, 31, 32) are each disposed in these extension members to lock in position the throwing vanes (14, 15) which are angularly pivotable in the disc plane.

4. Centrifugal fertiliser broadcaster according to claim 3, characterised in that the locking means (26, 27, 30, 31, 32) are configured as elongate slots (26, 27) in the extension members (22, 23), and bolts which are disposed on the throwing vanes (14, 15) protrude into said slots.

5. Centrifugal fertiliser broadcaster according to at least one of the preceding claims, characterised in that two elongate slots are provided for each throwing vane (14, 15) and are disposed with a radial spacing therebetween, and in that screw bolts (28, 29, 30, 31), which are disposed on the throwing vanes (14, 15), protrude into these elongate slots (24, 25, 26, 27), wing nuts (32) being disposed on said bolts.

6. Centrifugal fertiliser broadcaster according to at least one of the preceding claims, characterised in that the centrifugal disc (11) has a concave configuration, and the throwing vanes (14, 15) have a linear configuration.

7. Centrifugal fertiliser broadcaster according to at least one of the preceding claims, characterised in that at least two throwing vanes (14, 15) of different lengths are disposed on each centrifugal disc (11), and in that a greater and/or heavier extension member (22) is associated with the shorter throwing vane (14) than is associated with the longer throwing vane (15).

8. Method of distributing fertiliser over working widths of more than 30 m, more especially 32 to 36 m, using a centrifugal fertiliser broadcaster according to claim 1, which is provided with two oppositely rotatable centrifugal discs, wherein the fertiliser is charged to the centrifugal discs at a spacing of 5 to 15 cm remote from the rotary axis of the centrifugal discs, wherein the centrifugal discs rotate at a speed of 600 to 1,000 revolutions per minute, preferably 700 to 900 revolutions per minute, and wherein the fertiliser is accelerated by throwing vanes disposed on the centrifugal discs, the external ends of said vanes describing circular paths of more than 80 cm, more especially 90 to 100 cm.

9. Method of distributing fertiliser, using a centrifugal fertiliser broadcaster according to claim 1, over an agricultural area having a tramline spacing of 12 m, the first tramline being established 6 m from one edge of the field and the additional translines lying at 12 m spacings relative to one another, characterised in that the operation commences in the second tramline, and the fertiliser is distributed there by throwing vanes on centrifugal discs of the centrifugal fertiliser broadcaster, which discs have an effective length such that their external parts describe circular paths having a diameter of at least 80 - 100 cm, and in that the broadcasting operation is continued when tramlines, situated 36 m from one another, are travelled.

## Revendications

1. Epandeur centrifuge d'engrais pour des largeurs de travail de 10 à 18 m ou 18 à 24 m ou 30 à 40 m, comprenant :
- un réservoir d'alimentation,
- deux disques d'épandage (11), entraînés en rotation, comportant les palettes d'éjection (15), ces disques étant amovibles,
- des organes de dosage réglables (5, 6) pour doser l'engrais du réservoir alimentant les disques d'épandage, avec une distance éloignée de 5 à 15 cm de l'axe de rotation des disques d'épandage,
- une installation d'entraînement pour entraîner des disques d'épandage (11) à des vitesses de rotation de 600 à 1000 tours/minute de préférence 700 à 900 tours/minute,
- l'extrémité extérieure des palettes d'éjection décrivant des trajectoires inférieures à 55 cm ou de 55 à 70 cm ou plus de 70 cm, de préférence 90 à 100 cm, interchangeables et prévues dans le plan des disques, de manière pivotante angulairement par rapport aux rayons et,
- des échelles ou des éléments d'indexage (19, 20) prévus sur les disques d'épandage (11) pour le réglage exact des palettes d'éjection,
- les différentes largeurs de travail s'obtenant en ce que les extrémités extérieures des palettes d'éjection décrivent des trajectoires circulaires différentes.

2. Epandeur centrifuge d'engrais selon la revendication 1, caractérisé en ce que les extrémités extérieures des palettes d'éjection (14, 15, 36, 39, 45, 46) comportent des surfaces de déviation (21) pivotantes dans les plans verticaux.

3. Epandeur centrifuge d'engrais selon la revendication 1 ou 2, caractérisé en ce que dans la zone des palettes d'éjection (14, 15) sur les disques d'épandage (11), se trouvent des prolongements (22, 23) dirigés radialement et ces prolongements comportent des éléments de blocage (26, 27, 30, 31, 32) pour bloquer les palettes d'éjection (14, 15) pivotantes angulairement dans le plan des disques.

4. Epandeur centrifuge d'engrais selon la revendication 3, caractérisé en ce que les éléments de blocage (26, 27, 30, 31, 32) sont réalisés sous forme de trous oblongs (26, 27) dans les prolongements (22, 23), ces trous oblongs recevant des goujons prévus sur les palettes d'éjection (14, 15).

5. Epandeur centrifuge d'engrais selon au moins l'une des revendications précédentes, caractérisé en ce que pour chaque palette d'éjection (14, 15) on a deux trous oblongs écartés radialement et ces trous oblongs (24, 25, 26, 27) reçoivent les vis (28, 29, 30, 31) prévues sur les palettes d'éjection (14, 15), des écrous-papillons (32) étant associés aux vis.

6. Epandeur centrifuge d'engrais selon au moins l'une des revendications précédentes, caractérisé en ce que le disque d'épandage (11) est de forme concave et les palettes d'éjection (14, 15) sont droites.

7. Epandeur centrifuge d'engrais selon au moins l'une des revendications précédentes, caractérisé en ce que sur chaque disque d'épandage (1), on a au moins deux palettes d'éjection (14, 15) de longueurs différentes et la plus courte palette d'éjection (14) présente le prolongement le plus long et/ou le plus lourd (22) que la palette d'éjection (18) la plus longue.

8. Procédé de distribution d'engrais sur des largeurs de travail dépassant 30 m notamment comprises entre 32 et 35 m à l'aide d'un épandeur centrifuge d'engrais selon la revendication 1 comportant deux disques d'épandage tournant en sens opposé, et recevant l'engrais à une distance de 5 à 15 cm de l'axe de rotation des disques d'épandage, les disques d'épandage tournant à une vitesse de rotation de 600 à 1000 tours/minute de préférence de 700 à 900 tours/minute et on accélère l'engrais avec les palettes d'éjection équipant les disques d'épandage, palettes dont l'extrémité extérieure décrit des trajectoires d'un diamètre supérieur à 80 cm et notamment compris entre 90 et 100 cm.

9. Procédé de distribution d'engrais avec un épandeur centrifuge selon la revendication 1 sur une surface agricole, avec des voies de passage distantes de 12 m, la première voie de passage se situant à 6 m du bord du champ et les autres voies de passage étant chaque fois juxtaposées suivant un intervalle de 12 m, procédé caractérisé en ce qu'on commence dans la seconde voie de passage et on y distribue l'engrais avec des palettes d'éjection équipant les disques d'épandage de l'épandeur centrifuge d'engrais ayant une longueur active telle que la partie extérieure des palettes décrit une trajectoire circulaire d'un diamètre d'au moins 80-100 cm et que l'on poursuit l'épandage dans des voies de passage chaque fois éloignées l'une de l'autre de 36 m.
